# EUROPÄISCHE PATENTSCHRIFT

(11) **EP 1 470 470 B1**
(45) Veröffentlichungstag und Bekanntmachung des Hinweises auf die Patenterteilung: **07.06.2006**
(21) Anmeldenummer: 03734646.7
(22) Anmeldetag: 15.01.2003
(51) Int. Cl.: G06F 3/033

(54) **VORRICHTUNG ZUR EINGABE VON INFORMATIONEN**
DEVICE FOR INPUTTING INFORMATION
DISPOSITIF D'INTRODUCTION D'INFORMATIONS

(30) Priorität: 28.01.2002 DE 10203209
(43) Veröffentlichungstag der Anmeldung: 27.10.2004
(73) Patentinhaber: SIEMENS AKTIENGESELLSCHAFT, 80333 München (DE)
(72) Erfinder: STAHLBERG, Kathleen, 08536 Plainsboro (US); HOLZ AUF DER HEIDE, Bernd, 81549 München (DE)
(86) Internationale Anmeldenummer: PCT/DE2003/000097
(87) Internationale Veröffentlichungsnummer: WO 2003/065297

(56) Entgegenhaltungen:
- WO-A-00/63874
- US-A1- 2001 022 578
- US-B1- 6 337 679

## Beschreibung

Die vorliegende Erfindung betrifft eine Vorrichtung zur Eingabe von Informationen nach den Merkmalen des Oberbegriffs des Anspruchs 1.

Die Bedienung einer graphischen Oberfläche erfolgt zumeist nicht direkt, sondern über ein weiteres Eingabehilfsmittel beispielsweise eine sogenannte Maus. Die Maus wird bezüglich einer Oberfläche bewegt, diese Bewegung wird erfasst und in eine Bewegung einer Läufereinheit (Cursor) auf der Anzeigeeinheit, beispielsweise einem Bildschirm, umgesetzt. Die Erfassung der Bewegung der Maus geschieht beispielsweise über eine an der Unterseite der Maus angebrachte, beweglich gelagerte Kugel, deren Bewegung über mechanische oder/und optische Sensorelemente im Inneren der Maus erfasst wird.
Zur Auswahl bestimmter Funktionalitäten, beispielsweise das Öffnen einer Datei, werden auf der Maus angebrachte Tasten benutzt, denen beispielsweise das Objekt (Datei) angeklickt wird.

Für mobile Geräte bietet sich an, als Steuerungseinheit nicht eine separate Maus zu verwenden, sondern die Steuerungseinheit zu integrieren. Bei Laptops wird oft als Steuerungseinheit eine drehbar gelagerte Kugel (Trackball) verwendet, welche sich bei der Tastatur befindet. Der Trackball bietet eine Möglichkeit zur freien Positionierung beziehungsweise Steuerung der Läufereinheit (Cursor), indem die Bewegungen des Trackballs von mechanischen und/oder optischen Sensoren aufgenommen und als Eingabesignal verarbeitet werden. Diese Sensoren befinden sich meist im Bereich der Halterung, in der die Kugel gelagert ist.

Für Funktionsbestätigungen und dergleichen werden hier analog zur Computermaus eine oder mehrere zusätzliche Tasten verwendet, die als separate, räumlich vom Trackball getrennte Tasten ausgeformt sind.

Dokument US6337679 zeigt ein Eingabegerät, in dem das an einer Achse angebrachte Innere eines beweglichen Rades von einem verformbaren Material gebildet wird. Durch drücken des Rades, kann ein Schalter aktiviert werden.

Dokument WO 00/63874 offenbart eine innerhalb der Hand zu haltende Zeigevorrichtung, mit einem quantitativ bestimmbaren Pressdruck.

Nachteilig daran ist, dass die Fläche beziehungsweise das Volumen des gesamten Eingabeelements durch diese separate Ausgestaltung erhöht wird. Weiterhin ist eine Bedienung ohne direkten Sichtkontakt schwierig, da ja der Benutzer die jeweiligen Tasten treffen muss. Auch müssen beispielsweise zum Aufruf von Funktionen mehrere unterschiedliche Eingabeelemente, etwa der Trackball und die zusätzlichen Tastenelement bedient werden.

Es ist daher Aufgabe der vorliegenden Erfindung, ein Eingabeelement anzugeben, welches nur wenig Raum beziehungsweise Fläche einnimmt und zudem leicht bedienbar ist.

Erfindungsgemäß ist ein Eingabeelement in einer entsprechenden Vorrichtung nicht nur beweglich, sondern auch verformbar ausgebildet. Über die Bewegungen des Eingabeelements lässt sich eine Läufereinheit auf einer Anzeigeeinheit bewegen. Funktionen, wie etwa das Anklicken eines Knopfes (Button) auf einer Benutzeroberfläche, werden über eine Verformung des Eingabeelements ausgewählt. Durch eine Verformung des Eingabeelements werden nämlich Schaltelemente bedient, über die entsprechende Steuerbefehle generiert werden oder auf die Anzeigeeinheit übertragen werden. Diese Schaltelemente befinden sich beispielsweise im Bereich einer Halterung, durch die das Eingabeelement gehalten wird.
Die Benutzung eines derartigen Eingabeelements ist intuitiv, wodurch sich beispielsweise auch ohne Sichtkontakt Informationen eingeben lassen.

In einer vorteilhaften Ausgestaltung ist das Eingabeelement mehrfach verformbar, wobei verschiedene Verformungen unterschiedliche Schaltelemente und somit Funktionalitäten auf der Anzeigeeinheit ansprechen.

In einer weiteren Ausgestaltung ist das Eingabeelement kugelförmig gebildet, und weist vorzugsweise eine Hülle auf, welche mit einer verformbaren Masse, beispielsweise einem Gel, gefüllt ist.

Weitere Vorteile und Ausgestaltungen der Erfindung werden anhand der Figuren erläutert.

Es zeigen:
- Fig. 1a-1c: die Bedienung eines verformbaren Eingabeelements und
- Fig. 2a-2c: die Ausgestaltung und Bedienung eines Eingabeelements in einem tragbaren Gerät.

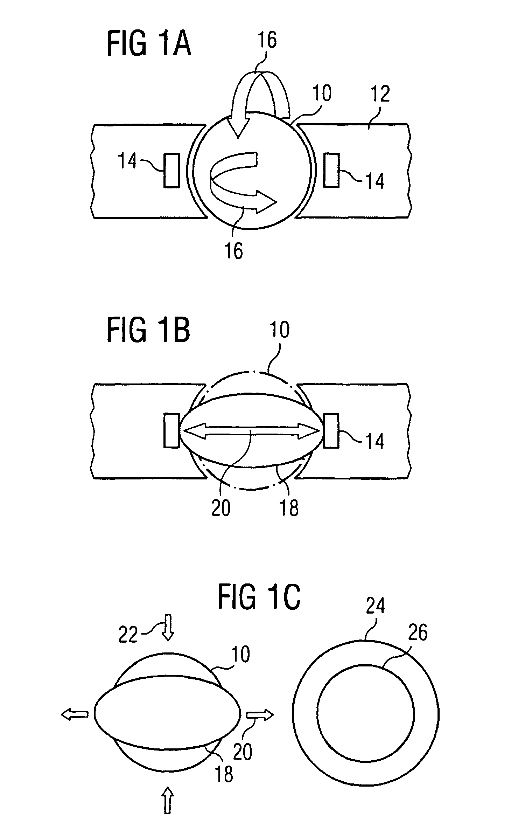

In Fig. 1a ist ein Trackball 10 als Eingabeelement zu sehen. Er befindet sich in einer Halterung 12, in welcher sich Schalterelemente 14, welche beispielsweise als Kontakte ausgebildet sind, befinden. Der Trackball 10 ist als verformbare Kugel ausgebildet. Sie wird beispielsweise durch eine liquide, geleeartige Masse realisiert, welche von einer dehnbaren Membran umhüllt ist. So lässt sich der Trackball 10 durch Einwirkung eines äußeren Druckes leicht verformen. Im nicht verformten Zustand besitzt der Trackball 10 Kugelform und lässt sich so frei in verschiedene Drehrichtungen 16 rollen, wobei die Rollbewegung beispielsweise durch übliche elektromechanische und/oder optische Sensoren erfasst und zur freien Positionierung einer Läufereinheit auf der Anzeigeeinheit genutzt wird.

In Fig. 1b ist der Trackball 10 in nicht deformiertem Zustand und in deformiertem Zustand 18 zu sehen. Die Deformationsrichtung 20 ist durch einen Pfeil gekennzeichnet. In deformiertem Zustand des Trackballs 18 werden durch ihn die Schalterelemente 14 betätigt. Die Betätigung der Schalterelemente 14 löst nun bestimmte Funktionalitäten auf der Anzeigeeinheit aus. Dabei handelt es sich beispielsweise um das Selektieren einer Schaltfläche, das heißt etwa das Drücken eines sogenannten Buttons (Knopf). Somit können die Funktionen der Positionierung der Läufereinheit (Cursorpositionierung) und die Auswahl der Funktionalitäten (beispielsweise Button drücken) bei einem derartigen Trackball 10 mit nur einem Eingabeelement durchgeführt werden. Die Bedienung des Trackballs 10 ist intuitiv und erfordert kein Umgreifen auf benachbarte Tasten zur Funktionsbestätigung. Dadurch eignet sich ein derartiges Eingabeelement insbesondere für Anwendungsfälle ohne Sichtkontakt zum Eingabeelement.
Die Oberfläche der Membran, welche den Trackball 10 umgibt, kann beliebig ausgestaltet werden, um beispielsweise die Griffigkeit zu erhöhen.

Bei den Schalterelementen 14 kann es sich um Kontakte oder Mikroschalterelemente handeln. Des Weiteren sind die drucksensitiven Elemente als Schalterelemente vorgesehen, beispielsweise sogenannte FSR Sensoren (FSR: Force Sensitive Resistor). Dadurch ist es möglich die jeweilige Stärke des Druckes auf den Trackball 10 als analogen Wert zu erfassen und diesen als zusätzliche Steuerungsinformation zu nutzen. Dies findet insbesondere Anwendung bei Spielen. Zur besseren Kontrolle, wieviel Druck auf dem Trackball 10 ausgeübt wird, kann zusätzlich noch ein Gegendruck durch elektromechanische Effektoren erzeugt werden. Dadurch nimmt beispielsweise der Druck bei stärkerer Verformung zu, wodurch dem Benutzer eine genauere Einschätzung ermöglicht wird, welchen Druck er gegenwärtig auf den Trackball 10 ausübt.

In Fig. 1c ist der Trackball in unverformtem und verformtem Zustand zu sehen. Bei Einwirken eines Druckes in der Druckrichtung 22 erfolgt eine Verformung des Trackballs 10 in Deformationsrichtung 20. In verformtem Zustand 18 hat der Trackball in Draufsicht einen größeren mittigen Umfang 24 als in unverformtem Zustand 26, so dass auf diese Weise der Kontakt zu den Schaltelementen 14 hergestellt wird.

Weiterhin können durch verschiedene Grade der Verformung verschiedene Funktionalitäten auf der Anzeigeeinheit ausgelöst werden. Dazu sind in der Halterung 12 mehrere Schaltelemente 14 angebracht, welche abhängig vom Grad der Verformung in Richtung der Deformationsachse 20 einzeln oder in Kombination bedient werden.
Unterschiedliche Verformungen werden auch durch unterschiedliche Druckrichtungen realisiert, etwa eine Druckrichtung 20 vertikal zur Halterung 12, welche ein "Abflachen" des Trackballs bewirkt, sowie eine Druckrichtung senkrecht dazu, also im Wesentlichen parallel zur Oberfläche der Halterung, welche beispielsweise durch ein Umklammern des Trackballs realisiert wird und eine "Längsverformung" bewirkt.

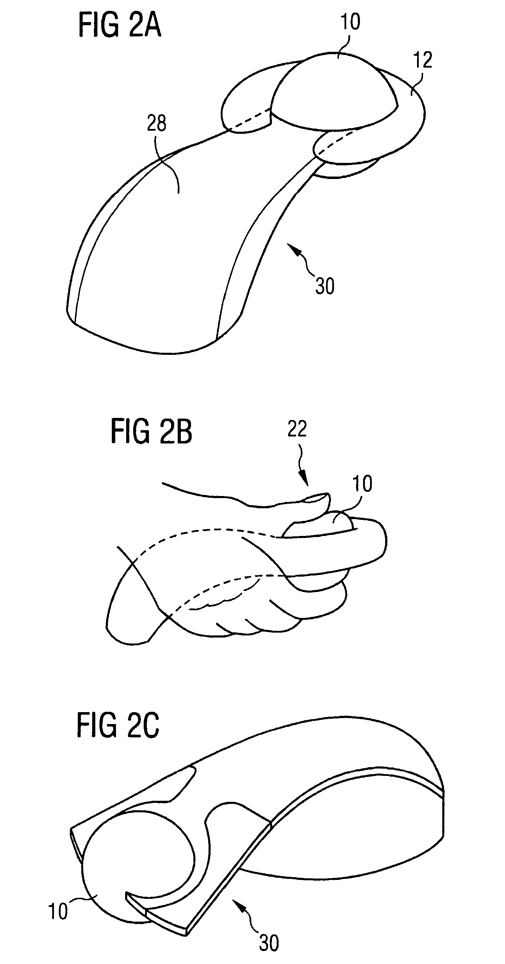

In Fig. 2 ist eine Ausgestaltung einer Vorrichtung mit einem Eingabeelement zu sehnen, welche sich gut für mobile Geräte eignet. Der Trackball 10 in Fig. 2a befindet sich in einer Halterung 12 welche zusammen mit einem angeformten Greifbereich 28 als Eingabevorrichtung 30 ausgebildet ist. Der Greifbereich 28 ist ergonomisch ausgebildet, so dass er gut in der Hand liegt, und der Trackball 10, wie in Fig. 2b gezeigt, einfach in der Druckrichtung 22 komprimiert werden kann.

Eine Ausgestaltung der Eingabevorrichtung 30, bei der der Trackball 10 teilweise frei liegt, ist in Fig. 2c zu sehen. Der Druck auf den Trackball 10 kann in diesem Fall auch durch Drücken der Eingabevorrichtung 30 auf eine Unterlage, beispielsweise eine Tischplatte, ausgeübt werden.

Natürlich beschränkt sich die Erfindung nicht auf die ausgeführten Beispiele, sondern beinhaltet eine Vielzahl weiterer Ausführungsformen, welche hier nicht dargestellt sind. Insbesondere handelt es sich hierbei um andere Realisierungen der Verformbarkeit des Eingabeelements beispielsweise über ein elastisches Material oder auch ein Gas oder eine Flüssigkeit; auch von der Kugelform abweichende oder verschiedene Formen des Eingabeelements, beispielsweise eine Stabform (Stick) sind vorgesehen. Diese weiteren Ausgestaltungen können aber vom Fachmann anhand der gegebenen Informationen leicht in die Praxis umgesetzt werden.

### Bezugszeichenliste

- 10: Trackball
- 12: Halterung
- 14: Schalterelement
- 16: Drehrichtungen
- 18: Trackball in deformierten Zustand
- 20: Deformationsrichtung
- 22: Druckrichtung
- 24: mittiger Umfang in deformierten Zustand
- 26: mittiger Umfang
- 28: Greifbereich
- 30: Eingabevorrichtung

## Patentansprüche

1. Vorrichtung (30) mit einem Eingabeelement (10) zur Steuerung einer Anzeigeeinheit,
- mittels der eine Läufereinheit auf der Anzeigeeinheit bewegbar ist, und
- die Bewegungen des Eingabeelements (10) relativ zu einer Bezugsfläche mittels einer Bewegungserfassungseinheit erfasst werden,
**dadurch gekennzeichnet, dass**
- das Eingabeelement (10) verformbar ausgebildet ist und
- in verformtem Zustand des Eingabeelements (10) Schaltelemente (14) bedienbar sind,
- über welche Funktionalitäten auf der Anzeigeeinheit steuerbar sind.

2. Vorrichtung nach Anspruch 1,
**dadurch gekennzeichnet, dass**
das Eingabeelement (10) in einer Halterung (12) gelagert ist.

3. Vorrichtung nach Anspruch 1 oder 2,
**dadurch gekennzeichnet, dass**
das Eingabeelement (10) auf zumindest zwei unterschiedliche Arten verformbar ist und je nach Art der Verformung unterschiedliche Schaltelemente (14) zur Einstellung unterschiedlicher Funktionalitäten auf der Anzeigeeinheit bedienbar sind.

4. Vorrichtung nach einem der vorhergehenden Ansprüche,
**dadurch gekennzeichnet, dass**
das Eingabeelement (10) kugelförmig oder ellipsoidförmig ausgestaltet ist.

5. Vorrichtung nach einem der vorhergehenden Ansprüche,
**dadurch gekennzeichnet, dass**
das Eingabeelement (10) eine geschlossene Hülle aus verformbaren Material aufweist, in welcher eine verformbare Materie enthalten ist.

6. Vorrichtung nach Anspruch 5,
**dadurch gekennzeichnet, dass**
die Materie einen gasförmigen oder flüssigen Aggregatzustand aufweist.

## Claims

1. A device (30) with an input element (10) for controlling a display unit,
- by means of which a cursor unit can be moved on the display unit, and
- the movements of the input element (10) relative to a reference surface are detected by means of a motion detection unit,
**characterised in that**
- the input element (10) is configured in a deformable manner and
- switching elements (14) can be operated when the input element (10) is in a deformed state,
- by way of which functionalities can be controlled on the display unit.

2. A device according to claim 1,
**characterised in that**
the input element (10) is mounted in a holder (12).

3. A device according to claim 1 or 2,
**characterised in that**
the input element (10) can be deformed in at least two different manners and different switching elements (14) can be operated as a function of the manner of the deformation for the purposes of setting different functionalities on the display unit.

4. A device according to one of the preceding claims,
**characterised in that**
the input element (10) is designed to be ball-shaped or ellipsoid-shaped.

5. A device according to one of the preceding claims,
**characterised in that**
the input element (10) displays a closed shell of deformable material in which a deformable substance is contained.

6. A device according to claim 5,
**characterised in that**
the substance displays a gaseous or fluid state of aggregation.

## Revendications

1. Dispositif (30) comprenant un élément d'entrée (10) pour la commande d'une unité d'affichage,
- au moyen duquel une unité de pointeur peut être déplacée sur l'unité d'affichage, et
- les déplacements de l'élément d'entrée (10) par rapport à une surface de référence sont détectés au moyen d'une unité de saisie du déplacement,
**caractérisé en ce que**
- l'élément d'entrée (10) est déformable et
- à l'état déformé de l'élément d'entrée (10), il est possible d'actionner des éléments de commutation (14),
par l'intermédiaire desquels des fonctionnalités peuvent être commandées sur l'unité d'affichage.

2. Dispositif selon la revendication 1,
**caractérisé en ce que** l'élément d'entrée (10) est monté rotatif dans une monture (12).

3. Dispositif selon la revendication 1 ou 2,
**caractérisé en ce que** l'élément d'entrée (10) peut être déformé dans au moins deux modes différents et, selon le mode de la déformation, différents éléments de commutation (14) peuvent être actionnés pour le réglage de différentes fonctionnalités sur l'unité d'affichage.

4. Dispositif selon une des revendications précédentes,
**caractérisé en ce que** l'élément d'entrée (10) est sphérique ou ellipsoïdal.

5. Dispositif selon une des revendications précédentes,
**caractérisé en ce que** l'élément d'entrée (10) présente une enveloppe fermée en matière déformable dans laquelle est contenue une matière déformable.

6. Dispositif selon la revendication 5,
**caractérisé en ce que** la matière présente un état gazeux ou liquide.
